# EUROPÄISCHE PATENTSCHRIFT

(11) **EP 1 249 195 B1**
(45) Veröffentlichungstag und Bekanntmachung des Hinweises auf die Patenterteilung: **24.11.2004**
(21) Anmeldenummer: 02006949.8
(22) Anmeldetag: 26.03.2002
(51) Int. Cl.: A47J 27/21

(54) **Elektrischer Wasserkocher mit Filter und Dampfsperre**
Electric water heating vessel with filter and vapour barrier
Bouilloire électrique avec filtre et retenue de vapeur

(30) Priorität: 10.04.2001 DE 10117887
(43) Veröffentlichungstag der Anmeldung: 16.10.2002
(73) Patentinhaber: BSH Bosch und Siemens Hausgeräte GmbH, 81739 München (DE)
(72) Erfinder: Obermaier, Markus, Dipl.-Ing. (FH), 83365 Nussdorf (DE); Magg, Johannes, Dipl.-Ing., 83368 St. Georgen (DE)

(56) Entgegenhaltungen:
- EP-A- 1 062 897
- DE-U- 9 419 708
- FR-A- 2 701 372
- GB-A- 2 274 792

## Beschreibung

Die vorliegende Erfindung betrifft einen elektrischen Wasserkocher nach dem Oberbegriff des Patentanspruchs 1.

Ein derartiger Wasserkocher ist durch den Wasserkocher des Typs TW50301 der Marke Siemens bekannt. Dieser Wasserkocher weist in der Schnaupe ein Filter mit kleinen Öffnungen zum Zurückhalten von kleinen Teilchen in der zu erhitzenden Flüssigkeit auf. Insbesondere können mit diesem Filter beim Ausgießen der Flüssigkeit Kalkteilchen zurückgehalten werden, die sich beim Erhitzen von kalkhaltigen Flüssigkeiten bilden können. Die Öffnungen des Filters sind zwar klein, um auch kleine Partikel zurückhalten zu können, weisen jedoch in Summe eine große Fläche auf, so dass beim Erhitzen der Flüssigkeit entstehender Dampf durch das Filter entweichen kann und ein Ansprechen einer Dampferkennungsvorrichtung zum Abschalten des Wasserkochers bei kochender Flüssigkeit erschwert wird. Aus diesem Grund ist zusätzlich vor dem Filter in der Schnaupe eine Dampfsperre angeordnet, die den Durchtritt von Dampf behindert, um das Ansprechverhalten der Dampferkennungsvorrichtung zu verbessern. Die Dampfsperre besteht in einer in der Schnaupe vor dem Filter angeordneten und mit einer Öffnung versehenen Wand, die den Durchtritt von Dampf erschwert, so bei kochender Flüssigkeit den Dampfdruck innerhalb des Behälters erhöht und das Ansprechverhalten der Dampferkennungsvorrichtung verbessert. Nachteiligerweise erfordert eine solche Konstruktion die Ausgestaltung der Dampfsperre am Behälter und zusätzlich die Montage des getrennt ausgestalteten Filters.

Ferner ist aus der Druckschrift FR 93 01684 ein Wasserkocher mit einem Filter bekannt, der zur Erreichung einer erleichterten Reinigungsfähigkeit mehrschichtig aufgebaut ist und zwei Filtermittel aufweist, und zwar einen ersten Stofffilter und einen zweiten, grobrnaschigeren Stofffilter. Die Stofffilter dienen beide zum Filtern einer Flüssigkeit.

Der vorliegenden Erfindung liegt die Aufgabe zugrunde, einen Wasserkocher der eingangs genannten Art zu schaffen, bei dem der Aufwand für die Herstellung vereinfacht und insbesondere deren Kosten verringert werden können.

Erfindungsgemäß wird dies durch einen Wasserkocher mit den Merkmalen des Patentanspruchs 1 gelöst. Vorteilhafte Weiterbildungen und Ausgestaltungen der vorliegenden Erfindung sind in den Unteransprüchen definiert.

Durch die einstückige Ausgestaltung von Filter und Dampfsperre vereinfacht sich der Aufbau des Behälters wesentlich. Anstelle der Dampfsperre muss der Behälter nur eine Einrichtung zur Befestigung des Filterteils aufweisen, die sich mit geringerem Aufwand ausgestalten läßt. Probleme hinsichtlich der Entformbarkeit bei spritztechnisch hergestellten Behältern lassen sich so einfacher vermeiden und der Aufwand bei der Herstellung verringern.

Vorteilhafterweise weist der Behälter innen Rippen auf, zwischen denen das Filterteil zur Befestigung eingeschoben werden kann. Dabei können die der Behälterinnenseite zugewandten, freien Ränder der Rippen zueinander geneigt sein, um das Filterteil an der Behälterwand zu halten. Diese Ausführungsform ist besonders einfach.

Denkbar ist jedoch auch, eine oder mehrere Rippen vorzusehen, deren freier, dem Behälterinneren zugewandter Rand eine Verdickung aufweist, die in einen entsprechenden, sich nach innen verbreiternden Ausschnitt im Filterteil eingeschoben werden kann. Bei einer derartigen Ausgestaltung genügt bereits eine Rippe, um das Filterteil an dem Behälter zu befestigen. Zusätzlich können auch sich nicht verbreiternde Rippen zur Führung vorgesehen werden.

Vorteilhafterweise werden die Rippen im Behälter parallel angeordnet, um bei spritztechnisch hergestellten Behältern eine leichte Entformbarkeit zu erzielen.

Wenn das Filterteil entnehmbar ist, kann zusammen mit dem Filter und auch die Dampfsperre zur Reinigung entnommen werden. Dadurch wird zusätzlich auch die Reinigung des Behälters vereinfacht, der in seinem Inneren nach einer Entnahme des Filterteils weniger die Reinigung behindernde Teile enthält.

In einer besonders vorteilhaften Ausführungsform sind Wasserkocher und Filterteil so ausgestaltet, dass der Raum zwischen dem Filter und der Dampfsperre bei herausgenommenen Filterteil eine Öffnung aufweist, die bei in der Schnaupe angeordnetem Filterteil von einem Teil des Wasserkochers, insbesondere der Innenwand des Behälters verschlossen wird, damit beim Kochen entstehender Dampf nicht an der Dampfsperre und ausgegossene Flüssigkeit nicht an dem Filter vorbeiströmen können.

Auf diese Weise kann weiterhin das herausgenommene Filterteil besser gereinigt werden, da beide Seiten sowohl des Filters als auch der Dampfsperre zugänglich sind.

Die Dampfsperre weist vorzugsweise wenige, dafür aber große Öffnungen auf. Dadurch kann zum einen eine geringe Gesamtfläche der Öffnungen erreicht werden, um bei sich entwickelndem Dampf einen hohen Dampfdruck im Behälter zu erzielen, und wird zum anderen das Hindurchströmen von Flüssigkeit erleichtert, um ein schnelles Ausgießen der Flüssigkeit zu ermöglichen. Der Grund dafür ist, dass der Strömungswiderstand von Öffnungen für Flüssigkeiten sich nicht proportional zur Öffnungsfläche verändert und Flüssigkeit durch eine große Öffnung mit einer bestimmten Fläche leichter hindurchströmt als durch mehrere kleine Öffnungen mit der in Summe gleichen Fläche.

Um den Dampf möglichst früh am Ausströmen aus dem Behälter zu behindern, kann die Dampfsperre innen, auf der dem Behälterinneren zugewandten Seite des Filters angeordnet sein.

In einer vorteilhaften Ausführungsform weist der Wasserkocher eine von einem Deckel verschließbare Öffnung insbesondere zum Eingießen der zu erhitzenden Flüssigkeit auf und ist das Filterteil derart am Behälter befestigbar, dass das Filterteil einen Teil des Rands dieser Befüllöffnung bildet. Auf diese Weise wird die Herstellung des Behälters weiter vereinfacht, da der Behälter zwischen der Befüllöffnung und der Schnaupenöffnung keinen Steg aufweist, der insbesondere bei einem spritztechnisch hergestellten Behälter die Entformbarkeit erschwert. Weiterhin weist der Behälter auf diese Weise bei entnommenem Filterteil eine einzige große Öffnung auf, die die Reinigung des Behälter von innen vereinfacht.

Das Filterteil kann dabei eine Auflagefläche aufweisen, auf der der Deckel im geschlossenen Zustand aufliegt. Vorteilhafterweise weist das Filterteil einen flächigen Fortsatz auf, der die Befüllöffnung begrenzt und verkleinert. Mit diesem Fortsatz, der sich vom Filterteil weg erstreckt, kann die Gefahr verringert werden, dass bei geöffnetem Deckel und zu großer Neigung des Wasserkochers die auszugießende Flüssigkeit über das Filter hinwegfließt und somit enthaltene Teilchen nicht herausgefiltert werden. Weiterhin kann durch eine größere Ausführung dieses Fortsatzes die Befüllöffnung beliebig verkleinert werden, wobei unabhängig von der Größe der Befüllöffnung eine große Öffnung des Behälters bei herausgenommenem Filterteil erreicht wird, um die Reinigung von innen zu erleichtern.

Vorteilhafterweise wird das Filterteil und der Behälter aus Kunststoff, insbesondere als Kunststoffspritzteil, ausgeführt.

Nachfolgend ist ein Ausführungsbeispiel der Erfindung anhand schematischer Darstellungen näher beschrieben. Darin zeigen:
- Fig. 1: eine schematische Schnittansicht einer Ausführungsform des erfindungsgemäßen Wasserkochers,
- Fig. 2: eine vergrößerte Darstellung des Schnaupenbereichs des Wasserkochers gemäß Fig.1 mit eingesetztem Filterteil,
- Fig. 3: eine perspektivische Darstellung des Filterteils und
- Fig. 4: eine Vorderansicht des Filterteils.

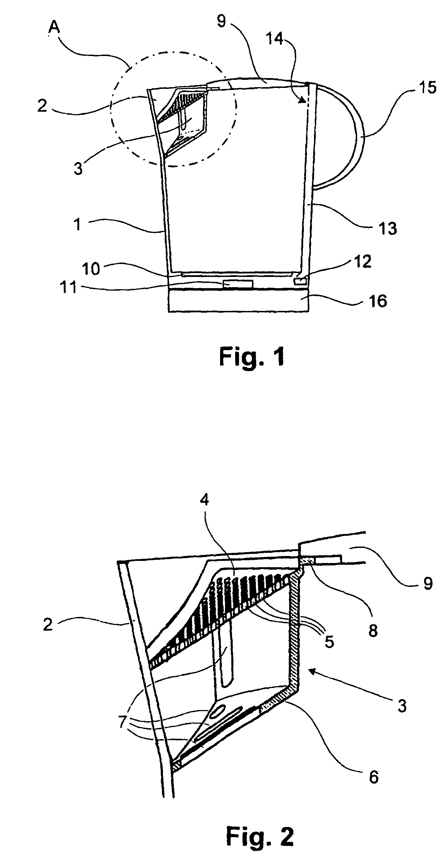

Der in Fig.1 dargestellte Wasserkocher weist einen Behälter 1 zur Aufnahme einer zu erhitzenden Flüssigkeit auf, wobei dem Behälter 1 an seiner Unterseite eine Heizung 10 zugeordnet ist. An seinem oberen Rand weist der Behälter 1 eine Schnaupe 2 auf, durch die die Flüssigkeit ausgegossen und gegebenenfalls auch eingefüllt werden kann. Innerhalb der Schnaupe 2 ist ein Filterteil 3 angeordnet, das eine Dampfsperre zum Behindern des Dampfaustritts aus dem Behälter und ein Filter zum Herausfiltern von kleinen Teilchen aus der Flüssigkeit aufweist.

Oben weist der Behälter 1 eine Befüllöffnung auf, die von einem am Behälter 1 angelenkten Deckel 9 verschlossen werden kann. Auf der der Schnaupe gegenüberliegenden Seite weist der Wasserkocher außen einen Griff 15 auf.

Unter dem Behälter 1 weist der Wasserkocher eine Steckkupplung 11 auf, die mit einem nicht dargestellten Gegenstück eines Sockels 16 mit Stromzuleitung zusammenwirkt, um die Heizung 10 mit Strom versorgen zu können. Weiterhin weist der Wasserkocher unter dem Behälter 1 einen Dampfschalter 12 auf, der beim Erkennen von Dampf die Stromzufuhr zur Heizung 10 unterbricht.

Dazu ist weiterhin neben dem Behälter 1 auf der Seite des Griffs 15 ein Dampfkanal 13 ausgebildet, der oben Dampföffnungen 14 aufweist, die in den Behälter 1 münden und in geringem Abstand zum oberen Ende des Behälters 1 angeordnet sind, um die Gefahr eines Eindringens von Flüssigkeit zu verringern. Sobald die Flüssigkeit innerhalb des Behälters 1 kocht und sich Dampf entwickelt, strömt der Dampf durch die Dampföffnungen 14 und den Dampfkanal 13 zum Dampfschalter 12 und sorgt für ein Abschalten der Heizung 10. Das Ausströmen des Dampfs durch die Schnaupe hindurch wird durch die Dampfsperre im Filterteil 3 behindert.

Der in Fig. 1 mit A bezeichnete Ausschnitt ist vergrößert in Fig. 2 dargestellt. Das dort dargestellte Filterteil 3 weist oben das Filter 4 und unten die Dampfsperre 6 auf. Das Filter 4 weist zahlreiche, aber kleine Filteröffnungen 5 auf, wohingegen die Dampfsperre 6 wenige, dafür aber große Dampfsperrenöffnungen 7 aufweist. Die Gesamtfläche der Filteröffnungen 5 beträgt zwischen 270 und 300 mm², wohingegen die Gesamtfläche der Dampfsperrenöffnungen ungefähr 180 mm² beträgt. Die Fläche der Filteröffnungen 5 beträgt demnach im vorliegenden Fall ungefähr das 1,5-fache bis 1,66-fache der Fläche der Dampfsperrenöffnungen 7.

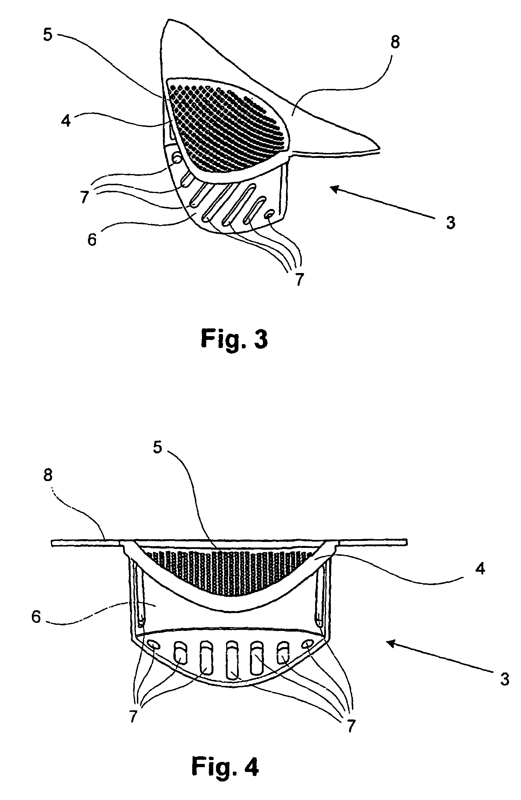

Die Dampfsperre 6 weist einen L-förmigen Querschnitt auf, wobei der untere Schenkel des L-förmigen Querschnitts geneigt ist. Die meisten Dampfsperrenöffnungen 7 sind im unteren geneigten Teil der Dampfsperre 6 angeordnet, der im wesentlichen parallel zum Filter 4 verläuft. Am oberen, nahezu senkrecht verlaufenden Teil der Dampfsperre 6 sind nur an den Rändern Öffnungen 7 angeordnet, wie auch insbesondere in Fig. 4 dargestellt ist.

Der zwischen dem Filter 4 und dem unteren Teil der Dampfsperre 6 liegende Zwischenraum wird oben durch das Filter 4 und unten und auf der in Fig. 2 rechts dargestellten Seite durch die Dampfsperre 6 begrenzt. Die in Fig. 2 links dargestellte Seite wird durch die Wand des Behälters 1 bzw. durch die Innenseite der Schnaupe 2 begrenzt. Beim Ausgießen strömt somit die Flüssigkeit durch die Dampfsperre 6 und das Filter 4. Wenn das Filterteil 3 herausgenommen wird, ist jedoch der Raum zwischen dem Filter 4 und der Dampfsperre 6 offen und für eine Reinigung zugänglich.

An der der Wand des Behälters 1 gegenüberliegenden Seite bzw. seiner Rückseite weist das Filterteil 3 einen Fortsatz 8 auf, der als Auflagefläche für den Deckel 9 zum Verschluss des Behälters 1 dient. Der Fortsatz 8 verhindert mit dem Deckel 9, dass beim Ausgießen die Flüssigkeit am Filter 4 vorbeiströmt und so nicht gefiltert wird.

In Fig. 3 ist das Filterteil 3 perspektivisch dargestellt. Der Fortsatz 8 des Filterteils 3 bildet eine flächige Fortsetzung der Rückseite und der Ränder des Filterteils 3, die die Befüllöffnung des Behälters 1 bei eingesetztem Filterteil 3 verkleinert. Das dem Filterteil 3 gegenüberliegende Ende des Fortsatzes 8 bildet einen bogenförmigen Teil des Rands der Befüllöffnung.

Wie in Fig. 4 in einer Vorderansicht des Filterteils 3 zu sehen ist, bildet der Fortsatz 8 oben eine plane Fläche, gegen die der Deckel 9 den Behälter 1 verschließen kann.

## Patentansprüche

1. Elektrischer Wasserkocher mit einem Behälter (1) für Flüssigkeit, einer Heizeinrichtung (10) zum Erhitzen der Flüssigkeit im Behälter (1), einer Schnaupe (2) im oberen Bereich des Behälters (1) und einer Dampferkennungsvorrichtung (12), wobei in der Schnaupe (2) ein Filter (4) und eine Dampfsperre (6) mit Öffnungen (7), die zur Erhöhung des Dampfdrucks innerhalb des Behälters bei kochender Flüssigkeit vorgesehen ist, angeordnet sind, **dadurch gekennzeichnet, dass** das Filter (4) und die Dampfsperre (6) ein einstückiges Filterteil (3) bilden.

2. Wasserkocher nach Anspruch 1, **dadurch gekennzeichnet, dass** das Filterteil (3) am Behälter (1) entnehmbar befestigbar ist.

3. Wasserkocher nach Anspruch 1 oder 2, **dadurch gekennzeichnet, dass** der Raum zwischen dem Filter (4) und der Dampfsperre (6) bei in der Schnaupe (2) angeordnetem Filterteil (3) zu einem Teil von der Wand des Behälters (1) begrenzt wird.

4. Wasserkocher nach einem der Ansprüche 1 bis 3, **dadurch gekennzeichnet, dass** die Gesamtfläche der Dampfsperrenöffnungen (7) kleiner als die Gesamtfläche der Öffnungen (5) des Filters (4) ist.

5. Wasserkocher nach einem der Ansprüche 1 bis 4, **dadurch gekennzeichnet, dass** die Dampfsperre (6) auf der dem Behälterinnern zugewandten Seite des Filters (4) angeordnet ist.

6. Wasserkocher nach einem der Ansprüche 1 bis 5, **dadurch gekennzeichnet, dass** an der Innenseite des Behälters (1) im Bereich der Schnaupe (2) im wesentlichen parallele Rippen ausgeformt sind, zwischen denen das Filterteil (3) zur Befestigung einschiebbar ist.

7. Wasserkocher nach einem der Ansprüche 1 bis 6, **dadurch gekennzeichnet, dass** der Wasserkocher einen Deckel (9) zum Verschließen einer Öffnung des Behälters (1) aufweist und das Filterteil (3) am Behälter (1) befestigbar ist und einen Teil des Rands der vom Deckel (9) verschließbaren Behälteröffnung bildet.

8. Wasserkocher nach Anspruch 7, **dadurch gekennzeichnet, dass** das Filterteil (3) einen flächigen Fortsatz (8) aufweist, der bei in der Schnaupe (2) angeordnetem Filterteil (3) die vom Deckel (9) verschließbare Behälteröffnung begrenzt.

9. Wasserkocher nach einem der Ansprüche 1 bis 8, **dadurch gekennzeichnet, dass** das Filterteil (3) aus Kunststoff ist.

10. Wasserkocher nach einem der Ansprüche 1 bis 9, **dadurch gekennzeichnet, dass** der Behälter (1) aus Kunststoff ist.

## Claims

1. Electric kettle with a container (1) for liquid, a heating device (10) for heating the liquid in the container (1), a spout (2) in the upper region of the container (1) and a steam recognition device (12), wherein a filter (4) and a steam block (6) with openings (7), which is provided for increasing the steam pressure within the container when liquid is boiling, are arranged in the spout (2), **characterised in that** the filter (4) and the steam block (6) form an integral filter part (3).

2. Kettle according to claim 1, **characterised in that** the filter part (3) is removably fastenable to the container (1).

3. Kettle according to claim 1 or 2, **characterised in that** the space between the filter (4) and the steam block (6) when the filter part (3) is arranged in the spout (2) is bounded relative to a part of the wall of the container (1).

4. Kettle according to one of claims 1 to 3, **characterised in that** the total area of the steam block openings (7) is less than the total area of the openings (5) of the filter (4).

5. Kettle according to one of claims 1 to 4, **characterised in that** the steam block (6) is arranged on the side of the filter (4) facing the container interior.

6. Kettle according to one of claims 1 to 5, **characterised in that** substantially parallel ribs between which the filter part (3) can be pushed in for fastening are integrally formed at the inner side of the container (1) in the region of the spout (2).

7. Kettle according to one of claims 1 to 6, **characterised in that** the kettle has a lid (9) for closing an opening of the container (1) and the filter part (3) is fastenable to the container (1) and forms a part of the edge of the container opening closable by the lid (9).

8. Kettle according to claim 7, **characterised in that** the filter part (3) has a flat projection (8) which when the filter part (3) is arranged in the spout (2) bounds the container opening closable by the lid (9).

9. Kettle according to one of claims 1 to 8, **characterised in that** the filter part (3) is of plastics material.

10. Kettle according to one of claims 1 to 9, **characterised in that** the container (1) is of plastics material.

## Revendications

1. Bouilloire électrique munie d'un récipient (1) à liquide, d'un dispositif chauffant (10) pour chauffer le liquide dans le récipient (1), d'un bec verseur (2) dans la zone supérieure du récipient (1) et d'un dispositif de détection de vapeur (12), un filtre (4) et une retenue de vapeur (6) munie d'ouvertures (7), prévue pour augmenter la pression de vapeur à l'intérieur du récipient lorsque le liquide bout, étant disposés dans le bec verseur (2), **caractérisée en ce que** le filtre (4) et la retenue de vapeur (6) forment une partie filtre (3) monobloc.

2. Bouilloire selon la revendication 1, **caractérisée en ce que** la partie filtre (3) peut être fixée au récipient (1) de manière amovible.

3. Bouilloire selon la revendication 1 ou 2, **caractérisée en ce que** l'espace entre le filtre (4) et la retenue de vapeur (6), avec la partie filtre (3) disposée dans le bec verseur (2), est limitée en partie par la paroi du récipient (1).

4. Bouilloire selon l'une des revendications 1 à 3, **caractérisée en ce que** la surface totale des ouvertures de la retenue de vapeur (7) est inférieure à la surface totale des ouvertures (5) du filtre (4).

5. Bouilloire selon l'une des revendications 1 à 4, **caractérisée en ce que** la retenue de vapeur (6) est disposée sur la face du filtre (4) orientée vers l'intérieur du récipient.

6. Bouilloire selon l'une des revendications 1 à 5, **caractérisée en ce que** des nervures essentiellement parallèles sont formées à la face intérieure du récipient (1) dans la zone du bec verseur (2), entre lesquelles la partie filtre (3) peut être insérée pour sa fixation.

7. Bouilloire selon l'une des revendications 1 à 6, **caractérisée en ce que** ladite bouilloire comporte un couvercle (9) pour obturer une ouverture du récipient (1) et **en ce que** la partie filtre (3) peut être fixée au récipient (1) et forme une partie du bord de l'ouverture du récipient pouvant être obturée par le couvercle (9).

8. Bouilloire selon la revendication 7, **caractérisée en ce que** la partie filtre (3) présente un prolongement plan (8), qui avec la partie filtre (3) disposée dans le bec verseur (2), limite l'ouverture du récipient pouvant être obturée par le couvercle (9).

9. Bouilloire selon l'une des revendications 1 à 8, **caractérisée en ce que** la partie filtre (3) est en matière plastique.

10. Bouilloire selon l'une des revendications 1 à 9, **caractérisée en ce que** le récipient (1) est en matière plastique.
